# EUROPÄISCHE PATENTANMELDUNG

(11) **EP 2 926 968 A1**
(43) Veröffentlichungstag der Anmeldung: **07.10.2015**
(21) Anmeldenummer: 15160573.0
(22) Anmeldetag: 24.03.2015
(51) Int. Cl.: B29C 44/18, B29C 44/22, B29C 47/00, B27N 3/28, E06B 3/22, B29K 105/06, B29L 31/00

(54) **Verfahren zur Herstellung eines Profilelements aus einem holzfaserverstärkten Kunststoff, sowie ein derartiges Profilelement, ein hiermit versehenes Verbundprofil und eine daraus gebildete Fensteranordnung**

(30) Priorität: 25.03.2014 DE 102014104112
(71) Anmelder: G. S. Georg Stemeseder GmbH, 5322 Hof bei Salzburg (AT)
(72) Erfinder: Mösl, Bernhard, 5201 Seekirchen am Wallersee (AT)
(74) Vertreter: Kuhnen & Wacker

(57) **Zusammenfassung**

Die Erfindung betrifft ein Verfahren zur Herstellung eines Profilelements (23, 33) aus einem holzfaserverstärkten Kunststoff, mit den Schritten: Bereitstellen einer fließfähigen Masse aus einem holzfaserverstärkten Kunststoff, Extrudieren der Masse unter wenigstens zeitweiliger Ausbildung von Hohlräumen, wenigstens teilweises Ausschäumen der Hohlräume innerhalb der extrudierten Masse mit einem Dämmmaterial, und Verfestigen der Masse zur Ausbildung des Profilelements (23, 33). Es zeichnet sich dadurch aus, dass die Hohlräume durch Dome der Extrusionseinrichtung ausgebildet werden, welche eine geringere Länge in der Extrusionsrichtung aufweisen als eine äußere Extrusionsform, wobei die extrudierte, noch nicht verfestigte Masse in die in Extrusionsrichtung nach dem Ende der Dome vorliegenden Hohlräume eindringt, dort aufschäumt und die Hohlräume wenigstens teilweise mit dem holzfaserverstärkten Kunststoff des Profilelements (23, 33) ausfüllt. Zudem betrifft die Erfindung ein Profilelement (23; 33) aus einem holzfaserverstärkten Kunststoff, ein Verbundprofil (21; 31) aus einem Massivholzprofil (22; 32) und dem erfindungsgemäßen Profilelement (23; 33) und eine Fensteranordnung (1).

## Beschreibung

Die Erfindung betrifft ein Verfahren zur Herstellung eines Profilelements aus einem holzfaserverstärkten Kunststoff, ein Profilelement aus einem holzfaserverstärkten Kunststoff sowie ein Verbundprofil aus einem Massivholzprofil und einem derartigen Profilelement. Sie betrifft darüber hinaus auch eine Fensteranordnung.

Holzfaserverstärkte Kunststoffe (Wood-Plastic-Composites (WPC)) sind eine Werkstoffgruppe, für welche sich zunehmend neue Anwendungsgebiete erschließen. Hierbei handelt es sich um einen Werkstoffverbund aus Holz mit einem Polymer, welcher der Gruppe der verstärkten Kunststoffe angehört. Diese lassen sich im Extrusions- und Spritzgussverfahren verarbeiten. Sie sind somit plastisch verarbeitbar und können neben den Anteilen von Holz und Kunststoff auch Zusätze enthalten, um bestimmte Materialeigenschaften einzustellen oder die Verarbeitung zu erleichtern.

Bekannt geworden sind derartige holzfaserverstärkte Kunststoffe zum Beispiel durch witterungsbeständige Terrassenbeläge, welche als Ersatz für Holzbeläge genutzt werden. Weitere Beispiele für den Einsatz derartiger holzfaserverstärkter Kunststoffe sind in der EP 2 599 622 A1 genannt. Hier ist eine Anwendung im Bereich des Fenster- und Türenbaus, der Möbelherstellung, bis hin zu Konstruktionsprofilen etc. angesprochen. Dieses Dokument offenbart dabei ein Verbundprofil aus Massivholz und holzfaserverstärktem Kunststoff sowie Verwendungen dieses Verbundprofils. Das Profilelement aus holzfaserverstärktem Kunststoff kann dabei als Vollprofil, Hohlkammerprofil oder auch in Plattenform ausgeführt sein.

Für den Einsatz im Fenster- und Türenbereich hat sich dieses bekannte Verbundprofil jedoch nur begrenzt als geeignet erwiesen. Das Problem liegt insbesondere darin, dass die Wärmeleitfähigkeit eines holzfaserverstärkten Kunststoffes in der Regel größer als jene eines Holzelements ist. Somit zeigen Fensterrahmenelemente oder dergleichen aus einem derartigen holzfaserverstärkten Kunststoff weniger gute Wärmedämmeigenschaften als die traditionell im Fensterbau eingesetzten Vollholzprofile oder verleimten Schichtholzprofile. Hieran ändert auch die Ausgestaltung dieser Profile aus holzfaserverstärktem Kunststoffen in Form von Hohlkammerprofilen nur sehr begrenzt etwas. Letztendlich ist der Einsatz derartiger Profilelemente somit im Fenster- oder Türenbau aus energetischen Gründen nicht bevorzugt und hat sich daher auch bislang nicht am Markt etablieren können. Hierbei spielt auch eine Rolle, dass mittlerweile die Verglasungen für Fenster oder Türen energetisch derart verbessert wurden, das die tatsächliche Wärmebrücke gerade nicht mehr die Verglasung darstellt, sondern der Rahmen, in dem diese gehalten ist.

Um die Einsatzmöglichkeiten derartiger holzfaserverstärkter Kunststoffe zu erweitern, ist es ferner bekannt geworden, diese in Gestalt von Hohlkammerprofilen mit einer Dämmfüllung in den Hohlräumen bereitzustellen.

Ein Beispiel hierfür offenbart das Dokument DE 10 2011 004 717 A1. Diese Schrift zeigt eine Holz-Kunststoff-Kombination sowie ein Verfahren zu deren Herstellung und Verwendungsmöglichkeiten dieser Holz-Kunststoff-Kombination im Bereich des Lärmschutzes. Diese Materialkombination enthält ein Substrat aus holzfaserverstärktem Kunststoff (WPC) in Verbindung mit einer Schicht und/oder einer Füllung aus partikularem und/oder faserförmig verwobenem Material. Die Füllung kann lose oder fixiert im Hohlraum des hier z.B. als Hohlkammerplatte ausgebildeten Substrats angeordnet sein, wobei sie dort durch Schüttung eingebracht wird. In einer Ausführungsform kann eine Füllung dabei aus WPC-Formmassepartikeln bestehen. Mittels der Füllung soll eine verbesserte Schallabsorption erzielt werden.

Darüber hinaus offenbart die WO 2008/049526 A1 einen polymeren, im Extrusionsverfahren hergestellten Hohlkörper mit einer Schaumfüllung, der unter anderem für Fensterprofile eingesetzt werden kann. Der Hohlkörper selbst kann dabei aus einem holzfaserverstärkten Kunststoff (WPC) bestehen. Auch der Schaum für die Füllung kann als WPC-Schaum ausgebildet sein und im Inneren eines Hohlraums des Hohlprofils angeordnet werden. Ein derart ausgebildeter Hohlkörper soll besonders hohen Belastungen standhalten und zugleich nur einen geringen Materialeinsatz erfordern.

Die aus diesen Schriften hervorgehenden Herstellungsverfahren erfordern ein mehrstufiges Vorgehen und sind aufwendig in der Durchführung. Zudem hat es sich in der Praxis als extrem schwierig erwiesen, hier eine Verfüllung der Hohlräume im gewünschten Maße und mit der erforderlichen Genauigkeit und Gleichmäßigkeit sicherzustellen.

Der Erfindung liegt daher die Aufgabe zu Grunde, ein verbessertes Verfahren zur Herstellung eines Profilelements aus einem holzfaserverstärkten Kunststoff aufzuzeigen. Ferner ist es eine weitere Aufgabe der vorliegenden Erfindung, ein verbessertes Profilelement aus einem holzfaserverstärkten Kunststoff bereitzustellen, welches bessere Wärmedämmeigenschaften zeigt. Darüber hinaus soll erfindungsgemäß ein hiermit versehenes Verbundprofil geschaffen werden, welches sich vorteilhaft als Rahmen in einer Fensteranordnung einsetzen lässt.

Gemäß einem ersten Aspekt der vorliegenden Erfindung wird nach Anspruch 1 ein Verfahren zur Herstellung eines Profilelements aus einem holzfaserverstärkten Kunststoff bereitgestellt. Dieses enthält die Schritte: Bereitstellen einer fließfähigen Masse aus einem holzfaserverstärkten Kunststoff, Extrudieren der Masse unter wenigstens zeitweiliger Ausbildung von Hohlräumen, wenigstens teilweises Ausschäumen der Hohlräume innerhalb der extrudierten Masse mit einem Dämmmaterial, und verfestigen der Masse zur Ausbildung des Profilelements. Dabei zeichnet sich das erfindungsgemäße Verfahren durch die weiteren Schritte aus, dass die Hohlräume durch Dorne der Extrusionseinrichtung ausgebildet werden, welche eine geringere Länge in der Extrusionseinrichtung aufweisen als eine äußere Extrusionsform, wobei die extrudierte, noch nicht verfestigte Masse in die in Extrusionsrichtung nach dem Ende der Dorne vorliegenden Hohlräume eindringt, dort aufschäumt und die Hohlräume wenigstens teilweise mit dem als Dämmmaterial dienenden holzfaserverstärkten Kunststoff des Profilelements ausfüllt.

Mit dem erfindungsgemäßen Verfahren lässt sich somit kostengünstig ein Profilelement aus holzfaserverstärktem Kunststoff in Großserie und mit hoher Prozesssicherheit herstellen.

Zugleich lässt sich innerhalb des Profilelements mit besonders geringem Herstellungsaufwand eine geschäumte Dämmfüllung erzeugen.

Zudem entsteht gleichzeitig ein Bauteil in nur einem Verfahrensschritt und aus nur einem einzigen Werkstoff, was die Verarbeitung erleichtert und auch die spätere Wiederverwertung bzw. Entsorgung vereinfacht. Das so hergestellte Profilelement ist somit einstückig ausgebildet und weist im Querschnitt Bereiche mit einer unterschiedlichen Dichte auf. Mit anderen Worten sind die aufgeschäumten Bereiche im Profilelement integral mit den anderen, massiven Anteilen an holzfaserverstärktem Kunststoff verbunden. Gleichzeitig ergibt sich dabei jedoch auch ein fließender Übergang zwischen massiven Bereichen im Profilelement und der Dämmfüllung in den teilweise oder ganz ausgeschäumten, jedenfalls zeitweilig bei der Extrusion vorhandenen Hohlräumen.

Überdies erhält das so hergestellte Profilelement besonders vorteilhafte Wärmedämmeigenschaften.

Vorteilhafte Weiterbildungen des erfindungsgemäßen Verfahrens sind Gegenstand der abhängigen Ansprüche 2 bis 6.

So ist es von Vorteil, wenn die extrudierte, noch nicht verfestigte Masse in die in Extrusionsrichtung nach dem Ende der Dorne vorliegenden Hohlräume eindringt, dort aufschäumt und die Hohlräume vollständig ausfüllt. Somit lässt sich erfindungsgemäß in einem Verfahrensschritt zuverlässig eine vollständige Verfüllung der Hohlräume mit der Dämmfüllung erzielen. Der verfahrenstechnische Aufwand hierfür ist somit besonders gering. Auf diese Weise lässt sich überdies ein Profilelement herstellen, in welchem ein Wärmeübergang durch Konvektion weitestgehend unterbunden ist, da die kleinzellige Schaumstruktur diese nicht zulässt. Dann können besonders gute Wärmedämmeigenschaften am erfindungsgemäß hergestellten Profilelement realisiert werden.

Ferner können die als Verstärkung dienenden Holzfasern im holzfaserverstärkten Kunststoff eine unterschiedliche Länge aufweisen, d.h. es kann ein bestimmter Anteil an Holzfasern mit einer vorgegebenen (kurzen) Länge mit einem Restanteil von Holzfasern mit deutlich größerer Länge als Verstärkungsmittel kombiniert sein. Praktische Versuche im Zuge der Erfindung haben gezeigt, dass es sehr vorteilhaft ist, Holzfasern unterschiedlicher Länge miteinander zu kombinieren. So wurde erkannt, dass relativ kurze Holzfasern die Schaumbildung bei der Herstellung von WPC-Schaum wesentlich begünstigen. Gleichzeitig ergibt sich jedoch ein relativ großer linearer thermischer Ausdehnungskoeffizient, wodurch bei Temperaturänderungen der sogenannte Bimetalleffekt auftreten kann, welcher eine Krümmung des Elements herbeiführt. Kombiniert man nun zu den herkömmlich verwendeten Holzfasern gezielt längere Holzfasern in einem geeigneten Mischungsverhältnis, so bewirkt dies eine Verminderung des linearen thermischen Ausdehnungskoeffizienten und verbessert somit die Formbeständigkeit des hergestellten Profilelements. Aber auch unabhängig von evtl. Temperaturschwankungen führen die zugegebenen längeren Holzfasern generell zu einer Versteifung und damit zu einer Stabilisierung des so hergestellten Profilelements.

Praktische Versuche hierzu haben gezeigt, dass es günstig ist, wenn zwischen 0,1 und 50 % der als Verstärkung dienenden Holzfasern im holzfaserverstärkten Kunststoff eine Länge zwischen 1 mm und 10 mm aufweisen, wobei ein verbleibender weiterer Anteil an Holzfasern eine Länge kleiner 1 mm aufweist. Je nach dem gewünschten Maß an Formbeständigkeit in dem durch das erfindungsgemäße Verfahren herzustellenden Profilelement lässt sich so ein geeignetes Mischungsverhältnis der "kurzen" mit den "langen" Holzfasern sowie eine geeignete Länge der "längeren" Holzfasern wählen, um die gewünschten Eigenschaften zu erzielen. In einer bevorzugten Ausführungsform weisen dabei zwischen 5 und 35 % der als Verstärkung dienenden Holzfasern eine Länge zwischen 1 mm und 10 mm auf. Vorzugsweise sind zwischen 15 und 25 % der Holzfasern in diesem Längenspektrum zugegeben. Aber auch die Länge dieser "längeren" Holzfasern ist in einer bevorzugten Ausführungsform in einem Bereich zwischen 2 mm und 5 mm gewählt. Die Länge der "kurzen" Holzfasern beträgt dabei bevorzugt weniger als 0,7 mm.

Alternativ oder ergänzend ist es möglich, dass Endlosfasern mit in die zu extrudierende Masse eingebracht werden. Damit lässt sich ein besonders stabiles Profilelement erzielen, wobei insbesondere Verformungen des Gesamtquerschnitts minimiert werden.

Vom weiteren Vorteil ist es, wenn der holzfaserverstärkte Kunststoff des Profilelements mit einem Kunststoff aus der Gruppe der Polyester gebunden ist. Praktische Versuche haben hier gezeigt, dass durch Einsatz von Polyester ein besonders gutes Ausschäumen der Hohlräume innerhalb der extrudierten Masse möglich ist. Das Verfahren vereinfacht sich dadurch wesentlich. Untersuchungen im Rahmen der Erfindung lassen dabei vermuten, dass das gute Aufschäumverhalten der extrudierten Masse bei Wegfall eines Gegendrucks durch die Dorne auf inhärente Eigenschaften des Polyesters zurückzuführen ist. Insbesondere scheinen die Esterfunktionsgruppen -[-CO-O-]-innerhalb des Kunststoffes hier eine vorteilhafte Rolle zu spielen. Für den praktischen Einsatz hat sich hier insbesondere Polyethylenterephthalat (PET) als geeignet erwiesen. Hierbei ist es ferner von Vorteil, wenn ein glykolmodifiziertes Polyethylenterephthalat zum Einsatz kommt, da der Werkstoff dann einen geringeren Schmelzpunkt als herkömmliches Polyethylenterephthalat aufweist und somit leichter in Verbindung mit den Holzfasern verarbeitbar ist. Außerdem lassen sich vorteilhafte Einflüsse auf das Ausschäumverhalten der extrudierten Masse in die Hohlräume erkennen.

Gemäß einem weiteren Aspekt der Erfindung wird die der Erfindung zu Grunde liegende Aufgabe durch ein Profilelement mit den Merkmalen des Anspruches 7 gelöst. Dieses zeichnet sich insbesondere dadurch aus, dass es im Querschnitt Bereiche aus massivem holzfaserverstärkten Kunststoff und Bereiche mit einem geschäumten Dämmmaterial aufweist, wobei die Bereiche mit dem geschäumten Dämmmaterial im Inneren des Profilelements vorliegen, wobei das geschäumte Dämmmaterial aus dem gleichen holzfaserverstärkten Kunststoff wie in den Bereichen aus massivem holzfaserverstärkten Kunststoff ausgebildet ist, und wobei das Profilelement als ein Bauteil aus nur einem einzigen Werkstoff vorliegt.

Das erfindungsgemäße Profilelement liegt somit als ein einstückiges Element vor, welches integral aus einem einzigen Werkstoff ausgebildet ist. Dabei sind jedoch Bereiche mit einer unterschiedlichen Dichte ausgebildet, wodurch es einerseits eine gute Eigenstabilität und Formbeständigkeit aufweist und andererseits durch den Anteil an Schaumfüllung besonders gute Wärmedämmeigenschaften zeigt. Das geschäumte Dämmmaterial kann dabei ggf. Hohlräume im Profilelement teilweise oder vollständig ausfüllen. Vorzugsweise wird das erfindungsgemäße Profilelement dabei nach dem oben erläuterten erfindungsgemäßen Verfahren hergestellt.

Erfindungsgemäß wurde hierbei insbesondere erkannt, dass sich ein Profilelement aus einem holzfaserverstärkten Kunststoff vorteilhaft dadurch energetisch weiterbilden und verbessern lässt, dass es nicht durchgehend aus massivem holzfaserverstärkten Kunststoff ausgestaltet ist, sondern in sich eingebettete Bereiche enthält, welche eine verbesserte Dämmwirkung entfalten. Dabei bilden die massiven Anteile an holzfaserverstärktem Kunststoff quasi das erforderliche Stützgerüst, damit das Profilelement hinreichende mechanische Festigkeitseigenschaften für die Anwendung im Fensterbau, Möbelbau, als Bodenbelag oder dergleichen aufweist. Gleichzeitig zeigt die geschäumte Struktur des Dämmmaterials eine geringere Dichte und somit ein geringeres Gewicht als die massiven Anteile, sowie besonders gute Dämmeigenschaften aufgrund der hierin eingeschlossenen, ruhenden Luft. Dies stellt eine wesentliche Verbesserung gegenüber herkömmlichen Hohlkammerprofilen dar, in deren Hohlkammern die Luft durchaus in erheblichem Maße zirkulieren kann.

Darüber hinaus zeichnet sich das geschäumte Dämmmaterial dabei durch eine hohe Druckfestigkeit aus, was die Stabilität des Profilelements nochmals verbessert.

Dadurch, dass das geschäumte Dämmmaterial aus dem gleichen holzfaserverstärkten Kunststoff wie in den Bereichen aus massivem holzfaserverstärkten Kunststoff ausgebildet ist, besteht das Profilelement aus einem gleichartigen Werkstoff, was sich positiv auf dessen Dauerhaftigkeit bzw. Langlebigkeit wie auch im Hinblick auf eine eventuelle Wiederverwertung im Zuge einer Entsorgung auswirkt.

Durch die Anordnung der Bereiche mit einem geschäumten Dämmmaterial im Inneren des Profilelements liegen diese zugleich geschützt vor, wodurch eine Beschädigung der Dämmlage bei äußeren Einflüssen vermieden werden kann. Gleichzeitig ergibt sich außenseitig eine einheitliche Oberfläche für das Profilelement aus dem massiven holzfaserverstärkten Kunststoff, was vorteilhaft hinsichtlich des Erscheinungsbildes und der Widerstandsfähigkeit des Profilelements ist. Da derartige Profilelemente häufig im Wohnbereich eingesetzt werden, ist dies von erheblicher Bedeutung.

Ein weiterer Vorteil der Bereiche aus massivem holzfaserverstärkten Kunststoff besteht darin, dass damit zuverlässige Ankoppelungsbereiche für hieran anbringbare Elemente oder auch für Eckverbindungen zwischen zwei miteinander verbundenen derartigen Profilelementen beispielsweise in Gestalt von Schlitz-Zapfen-Verbindungen, Dübelverbindungen, etc. gegeben sind.

Das erfindungsgemäße Profilelement aus einem holzfaserverstärkten Kunststoff lässt sich dabei mit einfachen Mitteln verarbeiten, die in der Regel aus dem holzverarbeitenden Bereich hinlänglich bekannt sind. Es lässt sich somit kostengünstig bereitstellen und weiterverarbeiten.

Vorteilhafte Weiterbildungen des erfindungsgemäßen Profilelements sind Gegenstand der abhängigen Ansprüche 8 bis 13.

So können die Bereiche aus massivem holzfaserverstärkten Kunststoff und die Bereiche mit einem geschäumten Dämmmaterial den gesamten Querschnitt des Profilelements einnehmen. Dann sind alle Querschnittsbereiche am Profilelement vollständig ausgefüllt, d.h. es verbleiben keine Hohlräume. Eine Wärmeübertragung durch Konvektion wird hierdurch besonders gut vermieden. Dementsprechend werden nochmals verbesserte Wärmedämmeigenschaften erzielt.

Ferner ist es auch möglich, dass der holzfaserverstärkte Kunststoff Holzfasern mit einer unterschiedlichen Länge aufweist. Damit werden die oben im Zuge des entsprechenden Verfahrensschritts erläuterten Vorteile am fertigen Produkt erzielt.

Zugleich ist es auch möglich, das Anteilsverhältnis der "längeren" Holzfasern zu den "kürzeren" Holzfasern sowie die Länge der jeweils verwendeten Fasern in der in Anspruch 10 definierten Weise zu wählen. Damit werden wiederum die oben anhand des Verfahrens erläuterten Vorteile auch für das Profilelement erzielt.

Wenn das Profilelement Endlosfasern enthält, zeichnet sich dieses durch eine besonders große Stabilität insbesondere gegenüber Verformungen aus.

Ferner hat es sich als vorteilhaft erwiesen, wenn der holzfaserverstärkte Kunststoff mit einem Kunststoff aus der Gruppe der Polyester gebunden ist. Untersuchungen im Zuge der Erfindung haben gezeigt, dass dieser Werkstoff besonders günstige Eigenschaften aufweist, um ein erfindungsgemäßes Profilelement mit derart unterschiedlichen Bereichen im Querschnitt herzustellen. Hierbei wird vorzugsweise ein Polyethylenterephthalat (PET) verwendet. Insbesondere kommt dabei ein glykolmodifiziertes Polyethylenterephthalat zum Einsatz, da dieses gegenüber einem herkömmlichen Polyethylenterephthalat einen reduzierten Schmelzpunkt aufweist und somit noch besser mit den Holzfasern verarbeitbar ist.

Ferner ist es bevorzugt, wenn das Profilelement in Stangenform vorliegt. Es lässt sich somit in günstiger Weise produzieren und als Halbzeug bereitstellen, wobei es dann vom Weiterverarbeiter, beispielsweise einem Fenster- oder Türenhersteller, individuell auf die gewünschte Länge des jeweils herzustellenden Objekts ablängbar ist. In der Praxis haben sich hier mitunter Stangen mit einer Länge von beispielsweise 6 m bewährt, um einerseits eine gute Handhabbarkeit und Transportierbarkeit der Profilelemente als auch andererseits gute Möglichkeiten für eine Weiterverarbeitung mit möglichst geringem Verschnitt zu erreichen. Grundsätzlich lässt sich die Länge der bereitgestellten Stangen jedoch beliebig wählen.

Gemäß einem weiteren Aspekt der vorliegenden Erfindung wird nach Anspruch 14 ein Verbundprofil aus einem Massivholzprofil und einem Profilelement aus einem holzfaserverstärkten Kunststoff bereitgestellt, welche miteinander verbunden sind, wobei sich das Verbundprofil dadurch auszeichnet, dass das Profilelement im Querschnitt Bereiche aus massivem holzfaserverstärktem Kunststoff und Bereiche mit einem geschäumten Dämmmaterial aufweist, wobei die Bereiche mit dem geschäumten Dämmmaterial im Inneren des Profilelements vorliegen, wobei das geschäumte Dämmmaterial aus dem gleichen holzfaserverstärkten Kunststoff wie in den anderen Bereichen aus massivem holzfaserverstärkten Kunststoff ausgebildet ist, und wobei das Profilelement als ein Bauteil aus nur einem einzigen Werkstoff vorliegt. Bevorzugt wird das Profilelement hierbei durch das erfindungsgemäße Verfahren hergestellt.

Ein derartiges Verbundprofil ist ein vorteilhaftes Halbzeug für die Ausgestaltung von Bauelementen im Wohnbereich, da durch das Massivholzprofil einerseits ein optisch und haptisch ansprechender Werkstoff vorliegt, der von einem Anwender vorteilhaft wahrgenommen wird, und andererseits durch das Profilelement aus dem holzfaserverstärkten Kunststoff eine besonders gute Wärmedämmwirkung bereitgestellt werden kann. Dies ist beispielsweise im Fenster- oder Türenbau der Fall, wo man das Massivholzprofil dann bevorzugt im Innenbereich anordnet, während das Profilelement aus dem holzfaserverstärkten Kunststoff angesichts seiner besseren Witterungsbeständigkeit, Formhaltigkeit und Dauerhaftigkeit eher dem Außenbereich zugeordnet.

Dabei sind derartige Verbundprofile als Ersatz für Profilhalbzeuge bei der Fenster- oder Türenherstellung oder dergleichen problemlos einsetzbar, da sie im Wesentlichen mit den gleichen Dimensionen und Profilquerschnitten bereitgestellt werden können, und zudem mittels weitestgehend den gleichen Maschinen verarbeitbar sind. Für einen Fensterhersteller oder dergleichen ändert sich durch den Einsatz des erfindungsgemäßen Verbundprofils somit hinsichtlich der weiteren Verarbeitung zur Herstellung eines Fensterrahmens oder dergleichen kaum etwas. Zugleich erhält er hier jedoch ein energetisch wesentlich verbessertes Produkt aufgrund der gesteigerten Wärmedämmfähigkeit. Ferner kann er weiterhin die gleichen Beschläge, Blendenprofile etc. wie bei herkömmlichen Holzfenstern bzw. Holz-Aluminium-Fenstern einsetzen. Überdies können durch eine geeignete Abstimmung des als Dämmmaterial dienenden geschäumten holzfaserverstärkten Kunststoffs handelsübliche Kleb- und Beschichtungsstoffe bei der Verarbeitung zur Anwendung gebracht werden. Damit lässt sich das erfindungsgemäße Verbundprofil vorteilhaft mit anderen Werkstoffen kombinieren.

Durch eine entsprechende Konfiguration bzw. Aufteilung der Bereiche aus massivem holzfaserverstärkten Kunststoff und der integral hiermit verbundenen Bereiche mit einem geschäumten Dämmmaterial im Querschnitt des Profilelements lässt sich das bereits oben angesprochene Profilelement an sich wie auch das Verbundprofil dabei so vorkonfektionieren, dass hierdurch auch unterschiedliche Profilquerschnitte für Fensterrahmen oder dergleichen von einem weiter verarbeitenden Betrieb etc. ausgestaltet werden können, ohne dass das Dämmmaterial dann ungeschützt an einer Oberfläche des weiterverarbeiteten Profils erscheinen würde. Hier kann eine entsprechende Anpassung des erfindungsgemäßen Profilelements bzw. Verbundprofils an die speziellen Erfordernisse des weiter verarbeitenden Betriebes oder dgl. problemlos erfolgen. Damit kann der Weiterverarbeiter ohne Änderungen in seinen Maschineneinstellungen oder hinsichtlich der verwendeten Werkzeuge in an sich bekannter Weise das gewünschte Endprodukt aus dem erfindungsgemäßen Verbundprofil herstellen.

Ein weiterer Vorteil liegt darin, dass geringere Beschränkungen hinsichtlich der einsetzbaren Holzarten und Holzqualitäten für die Massivholzprofile gegeben sind, da das Profilelement hier die erforderliche Tragfähigkeit bereitstellen kann.

Dabei ist das Massivholzprofil vorzugsweise stoffschlüssig mit dem Profilelement verbunden, da sich hier in der Praxis eine Verleimung dieser Elemente in der Serienproduktion als am besten geeignete Verbindungsweise herausgestellt hat.

Vorteilhafte Weiterbildungen des erfindungsgemäßen Verbundprofils sind Gegenstand der abhängigen Ansprüche 15 bis 17.

Mit der Maßgabe nach Anspruch 15 lassen sich analog die anhand der oben erläuterten abhängigen Ansprüche 8 bis 13 erzielbaren Vorteile erreichen.

Vom weiteren Vorteil ist es, wenn das Verbundprofil eine Massivholzblende aufweist, wobei das Profilelement zwischen der Massivholzblende und dem Massivholzprofil angeordnet ist. Dann lässt sich beidseitig am Verbundprofil ein zuverlässiger Schutz insbesondere gegenüber Verwitterung und mechanische Schädigung erzielen.

Besonders vorteilhaft ist es hierbei, wenn die Massivholzblende aus einer Holzart mit hoher natürlicher Dauerhaftigkeit ausgebildet ist. Sie bietet dann einen besonders guten Schutz gegenüber holzzerstörenden Pilzen und Insekten. Dies hat vor allem an den Vorteil, dass auf den Auftrag von chemischen Holzschutzstoffen in der Regel verzichtet werden kann. Wird dabei diese dauerhafte Massivholzblende außenseitig an einer Fensteranordnung eingesetzt, so kann dann unter Umständen auch am innenseitigen Massivholzprofil auf einen Holzschutz verzichtet werden, selbst wenn dieses aus einem weniger widerstandsfähigen Holzmaterial wie zum Beispiel Fichte ausgebildet ist. Ein derartiges Verbundprofil bzw. eine derartige Fensteranordnung zeichnen sich dann dadurch aus, dass deren Elemente wirkstofffrei, d.h. frei von schädlichen Substanzen, ausgebildet werden können, was das Produkt insbesondere für den Einsatz im öffentlichen Bereich wie Kindergärten, Schulen etc. besonders geeignet macht. Besonders geeignet ist hierbei adultes Kernholz der Akazie oder Eiche, da es sich hierbei um heimische Holzarten handelt und diese aus nachhaltiger Waldwirtschaft gut verfügbar sind.

Gemäß noch einem weiteren Aspekt der vorliegenden Erfindung wird nach Anspruch 18 eine Fensteranordnung mit einem Rahmen mit einem Verbundprofil sowie einer Verglasung oder dergleichen und einer Blende, vorzugsweise einer Metallblende, geschaffen, die an den Rahmen angekoppelt ist, und welche im eingebauten Zustand der Fensteranordnung außenseitig am Bauwerk vorliegt. Diese Fensteranordnung zeichnet sich dabei dadurch aus, dass das Verbundprofil in der erfindungsgemäßen Weise ausgebildet ist.

Eine derartige Fensteranordnung weist gegenüber einem herkömmlichen Holz-Aluminium-Fenster eine deutlich verbesserte Wärmedämmwirkung auf. Dies liegt an den verbesserten Dämmeigenschaften des Profilelements im Verbundprofil des Rahmens mit dem hier gegebenen geschäumten Dämmmaterial im Inneren. Gleichzeitig wird durch die außenseitig angeordnete Metallblende ein zuverlässiger Witterungsschutz erzielt.

Eine vorteilhafte Weiterbildung der erfindungsgemäßen Fensteranordnung ist Gegenstand des abhängigen Anspruches 19. Nach diesem kann das Profilelement aus holzfaserverstärktem Kunststoff im Querschnitt der Fensteranordnung zwischen der Blende und dem auf der Innenseite der Fensteranordnung vorliegenden Massivholzprofil angeordnet sein. Dann ist das Massivholzprofil auf der Innenseite der Fensteranordnung angeordnet, so dass sich hier ein besonders ansprechendes Erscheinungsbild zusammen mit einer angenehmen Haptik des Elements entfaltet.

Die Erfindung wird nachfolgend in Ausführungsbeispielen anhand der Figuren der Zeichnung näher erläutert. Es zeigt:
- Fig. 1: einen Schnitt durch eine erfindungsgemäße Fensteranordnung gemäß einer ersten Ausführungsform; und
- Fig. 2: einen Schnitt durch eine erfindungsgemäße Fensteranordnung gemäß einer zweiten Ausführungsform mit nur teilweise ausgefüllten Hohlräumen.

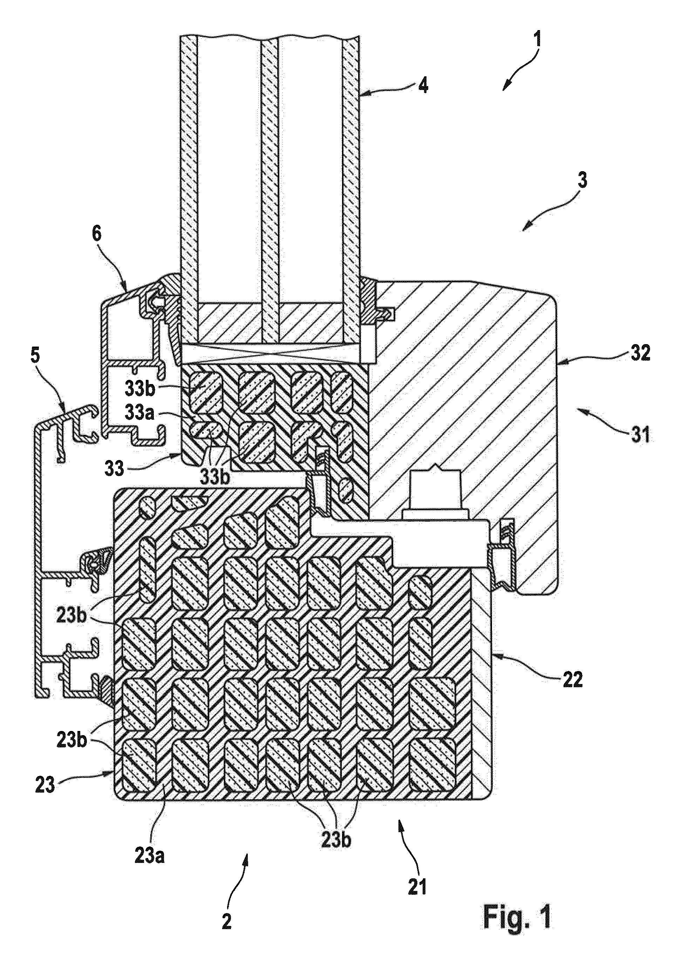

Gemäß der Darstellung in Figur 1 weist eine Fensteranordnung 1 einen Rahmen in Gestalt eines Fensterrahmens 2 und eines Flügelrahmens 3 auf. In den Flügelrahmen 3 ist eine Verglasung 4 eingesetzt, welche hier als Dreifachverglasung ausgebildet ist. Außenseitig am Fensterrahmen 2 bzw. Flügelrahmen 3 ist jeweils eine Metallblende 5 bzw. 6 angeordnet. Diese sind in an sich herkömmlicher Weise aus einem Aluminiumprofil ausgebildet und mittels hier nicht gezeigter Drehverbinder, Drehklipsverbinder oder dergleichen an den Fensterrahmen 2 bzw. den Flügelrahmen 3 angekoppelt. Darüber hinaus weist die Fensteranordnung 1 ferner noch die an sich üblichen Dichtelemente, Beschläge et cetera auf, welche hier nur andeutungsweise in der Figur gezeigt sind.

Der Fensterrahmen 2 weist ein Verbundprofil 21 auf, welches aus einem Massivholzprofil 22 und einem Profilelement 23 aus einem holzfaserverstärkten Kunststoff besteht. Diese sind miteinander durch Verleimung verbunden.

Der Flügelrahmen 3 weist ein Verbundprofil 31 auf, welches ebenfalls aus einem Massivholzprofil 32 und einem Profilelement 33 aus einem holzfaserverstärkten Kunststoff besteht. Auch diese sind mittels Verleimung miteinander verbunden.

Das Verbundprofil 21 und das Verbundprofil 31 stellen somit zwei Ausführungsbeispiele für erfindungsgemäße Konfigurationen dar, die hier in einer Ausführungsform der Erfindung gemeinsam eingesetzt werden.

Wie aus dem Schnitt der Figur 1 ersichtlich ist, weisen die Profilelemente 23 bzw. 33 im Querschnitt jeweils Bereiche 23a und 33a aus massivem holzfaserverstärkten Kunststoff und Bereiche 23b und 33b aus einem geschäumten Dämmmaterial auf. Die Bereiche 23a und 33a aus massivem holzfaserverstärkten Kunststoff bilden dabei ein Stützgerüst für das Profilelement 23 bzw. 33, sowie auch die äußere Oberfläche hiervon. Die Bereiche 23b und 33b aus geschäumtem Dämmmaterial liegen dementsprechend im Inneren des Profilelements 23 bzw. 33 vor. Sie sind aus dem gleichen holzfaserverstärkten Kunststoff ausgebildet, wie die Bereiche 23a und 33a aus massivem holzfaserverstärkten Kunststoff. Die Grenzen zwischen den Bereichen 23a bzw. 33a aus massivem holzfaserverstärkten Kunststoff und den Bereichen 23b bzw. 33b aus geschäumtem Dämmmaterial sind dabei produktionsbedingt fließend, so dass die Profilteile jeweils einstückig ausgestaltet sind.

In Figur 1 sind nur einige der Bereiche 23a, 23b, 33a und 33b mit Bezugszeichen angezogen, um die Übersichtlichkeit der Darstellung nicht zu beeinträchtigen.

Die Profilelemente 23 bzw. 33 sind so ausgebildet, dass als Bindemittel für die Holzfasern ein glykolmodifiziertes Polyethylenterephthalat als Kunststoffanteil eingesetzt wird.

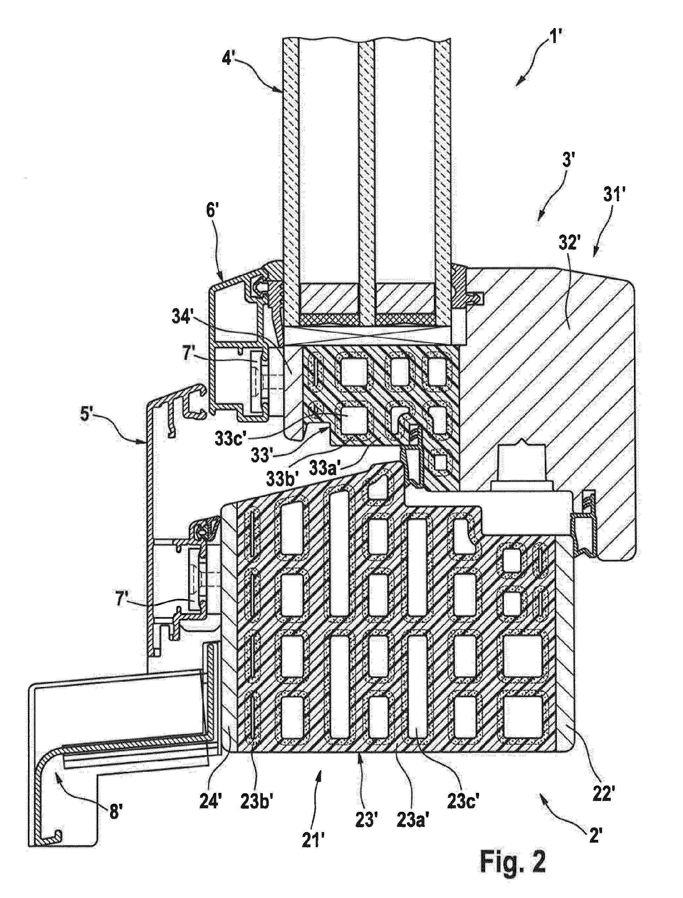

Figur 2 zeigt eine weitere Ausführungsform des erfindungsgemäßen Verbundprofils.

Gemäß der Darstellung in Figur 2 weist eine Fensteranordnung 1' ebenfalls einen Rahmen in Gestalt eines Fensterrahmens 2' und eines Flügelrahmens 3' auf. In den Flügelrahmen 3' ist eine Verglasung 4' eingesetzt, welche auch hier als Dreifachverglasung ausgebildet ist.

Außenseitig am Fensterrahmen 2' bzw. Flügelrahmen 3' ist jeweils eine Metallblende 5' bzw. 6' angeordnet. Diese sind in an sich herkömmlicher Weise aus einem Aluminiumprofil ausgebildet und mittels hier gezeigter Drehklipsverbinder 7' an den Fensterrahmen 2' bzw. den Flügelrahmen 3' angekoppelt. In Figur 2 ist zudem noch eine außenseitig an der Fensteranordnung 1' angeordnete Fensterbank 8' gezeigt. Darüber hinaus weist die Fensteranordnung 1' ferner noch die an sich üblichen Dichtelemente, Beschläge et cetera auf, welche hier nur andeutungsweise in der Figur gezeigt sind.

Der Fensterrahmen 2' weist ein Verbundprofil 21' auf, welches aus einem Massivholzprofil 22' und einem Profilelement 23' aus einem holzfaserverstärkten Kunststoff besteht. Anders als in der ersten Ausführungsform weist das Verbundprofil 21' zusätzlich eine Massivholzblende 24' an der Außenseite der Fensteranordnung 1' auf. Die Profile bzw. Profilelemente sind miteinander durch Verleimung verbunden.

Der Flügelrahmen 3' weist ein Verbundprofil 31' auf, welches ebenfalls aus einem Massivholzprofil 32' und einem Profilelement 33' aus einem holzfaserverstärkten Kunststoff besteht. Auch hier ist zusätzlich eine Massivholzblende 34' an der Außenseite der Fensteranordnung 1' angeordnet, wobei die Profile bzw. Profilelemente jeweils mittels Verleimung miteinander verbunden sind.

Das Verbundprofil 21' und das Verbundprofil 31' stellen somit wiederum zwei Ausführungsbeispiele für erfindungsgemäße Konfigurationen dar, die hier in einer Ausführungsform der Erfindung gemeinsam eingesetzt werden.

Wie aus dem Schnitt in Figur 2 ersichtlich ist, weisen die Profilelemente 23' bzw. 33' im Querschnitt jeweils Bereiche 23a' und 33a' aus massivem holzfaserverstärkten Kunststoff und Bereiche 23b' und 33b' aus einem geschäumten Dämmmaterial auf. Die Bereiche 23a' und 33a' aus massivem holzfaserverstärkten Kunststoff bilden dabei ein Stützgerüst für das Profilelement 23' bzw. 33', sowie auch die äußere Oberfläche hiervon. Die Bereiche 23b' und 33b' aus geschäumtem Dämmmaterial liegen dementsprechend im Inneren des Profilelements 23' bzw. 33' vor. Sie sind aus dem gleichen holzfaserverstärkten Kunststoff ausgebildet, wie die Bereiche 23a' und 33a'.

Anders als in der ersten Ausführungsform füllen die Bereiche 23b' und 33b' aus geschäumten Dämmmaterial die Freiräume im Verbundprofil 21' bzw. 31' in dieser zweiten Ausführungsform jedoch nicht vollständig aus. Somit liegen hier Hohlräume 23c' bzw. 33c' vor, welche einen Dampfdruckausgleich zulassen und gleichzeitig weiterhin für eine gute Dämmwirkung sorgen. Zudem wird damit Material eingespart, wodurch sich das Gewicht der Anordnung reduziert und zusätzlich die Herstellungskosten gering gehalten werden können.

Wie die gestrichelten Linien in Figur 2 an den Grenzen zwischen den Bereichen 23a' bzw. 33a' aus massivem holzfaserverstärkten Kunststoff und den Bereichen 23b' bzw. 33b' aus geschäumten Dämmmaterial noch stärker als die Darstellungsweise in Figur 1 verdeutlichen, bestehen hier keine scharfen Materialgrenzen; stattdessen liegt hier ein allmählicher, fließender Übergang zwischen dem massiven Anteil und der geschäumter Struktur des jeweiligen Profilelements vor. Dementsprechend ist hier auch ein fließender Übergang des Werts der Dichte im Material gegeben. Zugleich sind die Profilelemente 23' bzw. 33' somit einstückig ausgebildet.

In Figur 2 sind dabei wiederum nur einige der Bereiche 23a', 23b', 23c', 33a', 33b' und 33c' mit Bezugszeichen angezogen, um die Übersichtlichkeit der Darstellung nicht zu beeinträchtigen.

Die Profilelemente 23' bzw. 33' sind dabei wiederum so ausgebildet, dass als Bindemittel für die Holzfasern ein glykolmodifiziertes Polyethylenterephthalat als Kunststoffanteil eingesetzt wird.

Durch den Einsatz des Verbundprofils 21, 21', 31 bzw. 31' lassen sich in beiden Ausführungsformen besonders gute Wärmedämmeigenschaften an der Fensteranordnung 1 bzw. 1' erzielen. So kann diese einen Wärmedurchgangskoeffizienten mit einem Wert von U_{f} < 1,0 W/(m²K) und in besonders günstigen Fällen mit einem Wert von U_{f} < 0,8 W/(m²K) erreichen (Kennwert für den Fensterrahmen).

Im Rahmen der Erfindung lässt sich ein Profilelement mit einer Dichte in einem Bereich zwischen 0,5 und 0,8 g/cm³ herstellen. In praktischen Versuchen hat sich für das vorliegende Ausführungsbeispiel gezeigt, dass sich eine durchschnittliche Dichte über den gesamten Querschnitt gesehen von ca. 0,61 g/cm³ erzielen lässt.

Nachfolgend wird ein Herstellungsverfahren zur Ausbildung eines Profilelements 23, 23', 33 bzw. 33' näher erläutert.

Zunächst wird eine fließfähige Masse aus einem holzfaserverstärkten Kunststoff bereitgestellt. Diese enthält Holzfasern in einer unterschiedlichen Länge, wobei in den erläuterten Ausführungsbeispielen 80 % der Holzfasern eine Faserlänge kleiner 0,7 mm aufweisen. Typisch sind hier Faserlängen zwischen 0,15 und 0,7 mm. Die verbleibenden 20 % der Holzfasern weisen dagegen eine Länge von ca. 4 mm auf.

Der Kunststoff in dieser Masse ist ein glykolmodifiziertes Polyethylenterephthalat, mittels dem der Werkstoff nach Aushärtung gebunden ist. Der Masse können zudem zur gezielten Einstellung der Verarbeitbarkeit und der Materialeigenschaften des fertigen Produkts in geeigneter Weise Additive zugegeben sein. Beispiele hierfür sind Fließhilfsmittel, Nukleierungsmittel, Stabilisatoren, Gleitmittel, Trennmittel, Copolymere, Treibmittel etc.

Dann wird die Masse derart extrudiert, dass sich hierin Hohlräume im Querschnitt ausbilden. Hierzu ist die verwendete Extrusionseinrichtung derart ausgebildet, dass sie im Querschnitt Dorne aufweist, welche eine geringere Länge in der Extrusionseinrichtung aufweisen als eine äußere Form der Extrusionseinrichtung.

Die extrudierte, noch nicht verfestigte Masse dringt dann nach dem Wegfall des Gegendrucks durch die Dorne in die in Extrusionsrichtung nach dem Ende der Dorne vorliegenden Hohlräume ein und schäumt dort auf.

Durch gezielte Einstellung der Verfahrensparameter lässt sich dabei der Füllgrad der Hohlräume steuern.

Wenn wie in der oben erläuterten ersten Ausführungsform gemäß Figur 1 eine vollständige Ausfüllung der dann nur zeitweilig vorliegenden Hohlräume gewünscht ist, lässt sich dies insbesondere durch eine Abstimmung des am Ende der Dorne noch gegebenen Schäumvermögens der Masse aus dem holzfaserverstärkten Kunststoff einstellen.

Sofern die Hohlräume gemäß der zweiten Ausführungsform in Figur 2 nur teilweise ausgefüllt werden sollen, wird dies ebenfalls durch eine entsprechende Einjustierung der Verfahrensparameter bewerkstelligt, wobei dann die am Ende der Dorne noch gegebene Aufschäumfähigkeit der Masse zum Beispiel entsprechend geringer gewählt ist. Dies kann beispielsweise dadurch erfolgen, dass die Dorne insgesamt länger ausgebildet sind als in der anderen Ausführungsform, so dass die Masse bereits eine größere Festigkeit als in der ersten Ausführungsform besitzt, oder dass die zu extrudierende Masse durch Voreinstellung der Rezeptur eine andere Konsistenz aufweist.

Nach dem wenigstens teilweisen Ausschäumen der Hohlräume in der extrudierten Masse folgt dann der Schritt einer Verfestigung der Masse zur Ausbildung des fertigen Profilelements.

Die Erfindung lässt neben der erläuterten Ausführungsform weitere Gestaltungsansätze zu.

Die konkrete Profilgestalt des Fensterrahmens 2 bzw. 2' und des Flügelrahmens 3 bzw. 3' wie auch der Metallblenden 5 bzw. 5' und 6 bzw. 6' hängt vom jeweiligen Einsatzfall sowie den konstruktiven Vorgaben des Fensterherstellers ab. Sie kann dementsprechend variieren, wobei der Grundaufbau mit außen liegender Metallblende 5 bzw. 5' und 6 bzw. 6', innen liegendem Massivholzprofil 22 bzw. 22' und 32 bzw. 32' und dazwischen vorliegenden Profilelement 23 bzw. 23' und 33 bzw. 33' aus einem holzfaserverstärkten Kunststoff in der Regel beibehalten wird.

Ferner sind die Profilelemente 23 bzw. 23' und 33 bzw. 33' so ausgebildet, dass einerseits möglichst viele Bereiche 23b bzw. 23b' und 33b bzw. 33b' aus geschäumten Dämmmaterial vorliegen und dennoch für die Statik hinreichende Bereiche 23a bzw. 23a' und 33a bzw. 33a' aus massivem holzfaserverstärkten Kunststoff gegeben sind. Die Konstruktion kann in bestimmten Fällen auch durch weitere reine Massivholzbauteile ergänzt werden.

Um ein verbessertes Ausschäumen der Hohlräume zu erzielen, kann das Dämmmaterial auch ein Treibmittel enthalten, wobei dieses exothermer oder endothermer Natur sein kann.

Ferner muss der als Bindemittel für die Holzfasern dienende Kunststoff kein Polyethylenterephthalat sein; stattdessen kann auch ein geeigneter anderer Kunststoff aus der Gruppe der Polyester, oder auch eines der häufig für einen solchen Einsatzfall verwendeten Polymere wie Polyethylen (PE), Polypropylen (PP) oder Polyvinylchlorid (PVC) Anwendung finden.

Als Alternative kann auch ein geeignetes Biopolymer als Bindemittel für die Holzfasern eingesetzt werden, wodurch die Fensteranordnung insgesamt einen biologischen Charakter erhält.

Es ist nicht erforderlich, dass die Holzfasern im faserverstärkten Kunststoff eine unterschiedliche Länge aufweisen. Alle Holzfasern können somit ungefähr auch die gleiche Länge haben.

Sofern eine unterschiedliche Länge der Holzfasern gewünscht ist, kann der Anteil an Holzfasern mit einer Länge < 1 mm gegenüber längeren Holzfasern je nach Anwendungsfall in weitem Maße variieren. So kann es zuweilen sinnvoll sein, derartige unterschiedliche Fasern im Verhältnis 1 : 1 einzubringen, wobei in der Regel die längeren Holzfasern jedoch einen deutlich geringeren Anteil als die kürzeren Holzfasern im Verbundprofil haben werden.

Zudem ist es auch möglich, gezielt Endlosfasern mit in die zu extrudierende Masse einzubringen. Dies erfolgt bevorzugt im Bereich der Zugzonen im Extrusionsprozess und erlaubt es, die Verformungen des Gesamtquerschnitts eines Profilelements weiter zu minimieren.

Zudem ist es nicht erforderlich, dass das Profilelement bzw. das Verbundprofil in einer Stangenform vorliegen. Grundsätzlich können hier auch speziell vorgefertigte Formteile beispielsweise für einen passgenauen Riegel eines Fenster- oder Flügelrahmens ausgebildet werden, welche dann nicht mehr auf die speziellen Maße zugeschnitten werden müssen. Aber auch andere Formteile abweichend von einer Stangenform sind möglich.

Ferner ist es nicht erforderlich, dass das Massivholzprofil und das Profilelement stoffschlüssig miteinander verbunden sind. Stattdessen kann auch eine Klemmverbindung, eine formschlüssige Verbindung, eine Verschraubung oder dergleichen eingesetzt werden.

Anstelle einer Verleimung kann auch eine Verklebung des Massivholzprofils mit dem Profilelement durch einen geeigneten Klebstoff erfolgen. Grundsätzlich ist es auch möglich, den holzfaserverstärkten Kunststoff durch Co-Extrusion auf das Massivholzprofilelement aufzubringen und so eine zulässige Verbindung zwischen den Bestandteilen des Verbundprofils herzustellen.

Die Blende muss nicht als Metallblende ausgebildet sein; hier ist es grundsätzlich auch möglich, eine Kunststoffblende oder eine Holzblende sowie eine Blende aus einem anderen geeigneten witterungsbeständigen Werkstoff vorzusehen.

Anstelle der Massivholzblende 24' bzw. 34' kann an der Außenseite der Fensteranordnung 1' auch eine Blende aus einem anderen geeigneten, insbesondere feuchtigkeitsbeständigen Material eingesetzt werden.

Im Allgemeinen wird die Massivholzblende 24' bzw. 34' jedoch aus einem üblichen Konstruktionsholz wie z.B. Fichte gefertigt sein. Alternativ ist es aber auch möglich, eine Holzart mit hoher natürlicher Dauerhaftigkeit einzusetzen, wie z.B. Akazie mit einer Dauerhaftigkeitsklasse nach DIN EN 350-2 von 1-2 (dauerhaft bis sehr dauerhaft). Eine heimische Holzart ist dabei generell vorzuziehen. Durch die Verwendung eines derart dauerhaften Holzwerkstoffs für die Massivholzblende 24' bzw. 34' ist es dann möglich, auf den normativ vorgegebenen vorbeugenden Schutz gegen holzzerstörende Pilze und Insekten zu verzichten. Damit lässt sich eine "ökologische" Fensteranordnung erzielen, da der Auftrag von chemischen Holzschutzstoffen entfallen kann.

Das erfindungsgemäße Profilelement bzw. das Verbundprofil können nicht nur an Fensteranordnungen 1 bzw. 1' sondern auch beispielsweise an Fenstertüren, anderen Türanordnungen, sowie auch weiteren Konstruktionselementen für einen Wandaufbau oder dgl. eingesetzt werden. Auch eine Verwendung an flügellosen Fenstern, Dachflächenfenstern oder dergleichen ist ohne weiteres möglich.

Ferner kann das Verbundprofil 21 bzw. 31 auch aus mehr als zwei Lagen bestehen, so dass eventuell zusätzliche Massivholzprofile und/oder Profilelemente in variabler Abfolge im Querschnitt hierin vorliegen können, wie dies die Ausführungsform in Figur 2 beispielhaft zeigt.

In manchen Anwendungsfällen kann die Fensteranordnung 1 bzw. 1' anstelle einer Verglasung 4 bzw. 4' auch eine andere Ausfachung wie z.B. eine Platte, ein Lochblech, ein Gitter oder dgl. aufweisen.

## Patentansprüche

1. Verfahren zur Herstellung eines Profilelements (23, 33; 23', 33') aus einem holzfaserverstärkten Kunststoff, mit den Schritten:
Bereitstellen einer fließfähigen Masse aus einem holzfaserverstärkten Kunststoff, Extrudieren der Masse unter wenigstens zeitweiliger Ausbildung von Hohlräumen, wenigstens teilweises Ausschäumen der Hohlräume innerhalb der extrudierten Masse mit einem Dämmmaterial, und
Verfestigen der Masse zur Ausbildung des Profilelements (23, 33; 23', 33'),
**dadurch gekennzeichnet,**
**dass** die Hohlräume durch Dorne der Extrusionseinrichtung ausgebildet werden, welche eine geringere Länge in der Extrusionsrichtung aufweisen als eine äußere Extrusionsform, wobei die extrudierte, noch nicht verfestigte Masse in die in Extrusionsrichtung nach dem Ende der Dorne vorliegenden Hohlräume eindringt, dort aufschäumt und die Hohlräume wenigstens teilweise mit dem als Dämmmaterial dienenden holzfaserverstärkten Kunststoff des Profilelements (23, 33; 23', 33') ausfüllt.

2. Verfahren nach Anspruch 1, **dadurch gekennzeichnet, dass** die extrudierte, noch nicht verfestigte Masse in die in Extrusionsrichtung nach dem Ende der Dorne vorliegenden Hohlräume eindringt, dort aufschäumt und die Hohlräume vollständig ausfüllt.

3. Verfahren nach Anspruch 1 oder 2, **dadurch gekennzeichnet, dass** die als Verstärkung dienenden Holzfasern im holzfaserverstärkten Kunststoff eine unterschiedliche Länge aufweisen.

4. Verfahren nach Anspruch 3, **dadurch gekennzeichnet, dass** zwischen 0,1 und 50 %, vorzugsweise zwischen 5 und 35 % und insbesondere zwischen 15 und 25 %, der als Verstärkung dienenden Holzfasern im holzfaserverstärkten Kunststoff eine Länge zwischen 1 mm und 10 mm, vorzugsweise zwischen 2 mm und 5 mm, aufweisen, wobei ein verbleibender weiterer Anteil an Holzfasern eine Länge < 1 mm, vorzugsweise < 0,7 mm aufweist.

5. Verfahren nach einem der Ansprüche 1 bis 4, **dadurch gekennzeichnet, dass** Endlosfasern mit in die zu extrudierende Masse eingebracht werden.

6. Verfahren nach einem der Ansprüche 1 bis 5, **dadurch gekennzeichnet, dass** der holzfaserverstärkte Kunststoff mit einem Kunststoff aus der Gruppe der Polyester, vorzugsweise mit Polyethylenterephthalat (PET), insbesondere mit einem glykolmodifizierten Polyethylenterephthalat, gebunden wird.

7. Profilelement (23, 33; 23', 33') aus einem holzfaserverstärkten Kunststoff, vorzugsweise hergestellt nach einem Verfahren gemäß einem der Ansprüche 1 bis 6, welches im Querschnitt Bereiche (23a, 33a; 23a', 33a') aus massivem holzfaserverstärkten Kunststoff und Bereiche (23b, 33b; 23b', 33b') mit einem geschäumten Dämmmaterial aufweist, wobei die Bereiche (23b, 33b; 23b', 33b') mit dem geschäumten Dämmmaterial im Inneren des Profilelements (23, 33; 23', 33') vorliegen, wobei das geschäumte Dämmmaterial aus dem gleichen holzfaserverstärkten Kunststoff wie in den Bereichen aus massivem holzfaserverstärkten Kunststoff ausgebildet ist, und wobei das Profilelement (23, 33; 23', 33') als ein Bauteil aus nur einem einzigen Werkstoff vorliegt.

8. Profilelement nach Anspruch 7, **dadurch gekennzeichnet, dass** die Bereiche (23a, 33a; 23a', 33a') aus massivem holzfaserverstärkten Kunststoff und die Bereiche (23b, 33b; 23b', 33b') mit einem geschäumten Dämmmaterial den gesamten Querschnitt des Profilelements einnehmen.

9. Profilelement nach Anspruch 7 oder 8, **dadurch gekennzeichnet, dass** der holzfaserverstärkte Kunststoff Holzfasern mit einer unterschiedlichen Länge aufweist.

10. Profilelement nach Anspruch 9, **dadurch gekennzeichnet, dass** zwischen 0,1 und 50 %, vorzugsweise zwischen 5 und 35 % und insbesondere zwischen 15 und 25 %, der als Verstärkung dienenden Holzfasern im holzfaserverstärkten Kunststoff eine Länge zwischen 1 mm und 10 mm, vorzugsweise zwischen 2 mm und 5 mm, aufweisen, wobei ein verbleibender weiterer Anteil an Holzfasern eine Länge < 1 mm, vorzugsweise < 0,7 mm aufweist.

11. Profilelement nach einem der Ansprüche 7 bis 10, **dadurch gekennzeichnet, dass** es Endlosfasern enthält.

12. Profilelement nach einem der Ansprüche 7 bis 11, **dadurch gekennzeichnet, dass** der holzfaserverstärkte Kunststoff mit einem Kunststoff aus der Gruppe der Polyester, vorzugsweise mit Polyethylenterephthalat (PET), insbesondere mit einem glykolmodifizierten Polyethylenterephthalat, gebunden ist.

13. Profilelement nach einem der Ansprüche 7 bis 12, **dadurch gekennzeichnet, dass** es in Stangenform vorliegt.

14. Verbundprofil (21, 31; 21', 31') aus einem Massivholzprofil (22, 32; 22', 32') und einem Profilelement (23, 33; 23', 33') aus einem holzfaserverstärkten Kunststoff, welche miteinander verbunden sind, **dadurch gekennzeichnet, dass** das Profilelement (23, 33; 23', 33') vorzugsweise nach einem Verfahren gemäß einem der Ansprüche 1 bis 6 hergestellt ist und im Querschnitt Bereiche (23a, 33a; 23a', 33a') aus massivem holzfaserverstärkten Kunststoff und Bereiche (23b, 33b; 23b', 33b') mit einem geschäumten Dämmmaterial aufweist, wobei die Bereiche (23b, 33b; 23b', 33b') mit dem geschäumten Dämmmaterial im Inneren des Profilelements (23, 33; 23', 33') vorliegen, wobei das geschäumte Dämmmaterial aus dem gleichen holzfaserverstärkten Kunststoff wie in den Bereichen aus massivem holzfaserverstärkten Kunststoff ausgebildet ist, und wobei das Profilelement (23, 33; 23', 33') als ein Bauteil aus nur einem einzigen Werkstoff vorliegt.

15. Verbundprofil nach Anspruch 14, **dadurch gekennzeichnet, dass** das Profilelement (23, 33; 23', 33') aus einem holzfaserverstärkten Kunststoff mit wenigstens einem der Merkmale der Ansprüche 8 bis 13 weitergebildet ist.

16. Verbundprofil nach Anspruch 14 oder 15, **dadurch gekennzeichnet, dass** es eine Massivholzblende (24', 34') aufweist, wobei das Profilelement (23', 33') zwischen der Massivholzblende (24', 34') und dem Massivholzprofil (22', 32') angeordnet ist.

17. Verbundprofil nach Anspruch 16, **dadurch gekennzeichnet, dass** die Massivholzblende (24', 34') aus einer Holzart mit hoher natürlicher Dauerhaftigkeit wie z.B. adultes Kernholz der Akazie, Eiche oder dgl. ausgebildet ist.

18. Fensteranordnung (1; 1') mit einem Rahmen (2, 3; 2', 3') mit einem Verbundprofil (21, 31; 21', 31') sowie einer Verglasung (4; 4') oder dgl. und einer Blende, vorzugsweise einer Metallblende (5, 6; 5', 6'), die an den Rahmen (2, 3; 2', 3') angekoppelt ist, und welche im eingebauten Zustand der Fensteranordnung (1; 1') außenseitig am Bauwerk vorliegt, **dadurch gekennzeichnet, dass** das Verbundprofil (21, 31; 21', 31') nach einem der Ansprüche 14 bis 17 ausgebildet ist.

19. Fensteranordnung nach Anspruch 18, **dadurch gekennzeichnet, dass** das Profilelement (23, 33; 23', 33') aus holzfaserverstärktem Kunststoff im Querschnitt der Fensteranordnung (1; 1') zwischen der Blende (5, 6; 5', 6') und dem auf der Innenseite der Fensteranordnung (1; 1') vorliegenden Massivholzprofil (22, 32; 22', 32') angeordnet ist.
